(19) Europäisches Patentamt
European Patent Office
Office européen des brevets

(11) **EP 4 759 537 A1**

(12) **EUROPEAN PATENT APPLICATION**
published in accordance with Art. 153(4) EPC

(43) Date of publication:
**17.06.2026 Bulletin 2026/25**

(21) Application number: **23948499.1**

(22) Date of filing: **09.08.2023**

(51) International Patent Classification (IPC):
**B32B 15/08** (2006.01)        **B32B 15/04** (2006.01)

(52) Cooperative Patent Classification (CPC):
**B32B 15/04; B32B 15/08**

(86) International application number:
**PCT/JP2023/029176**

(87) International publication number:
**WO 2025/032782 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Resonac Corporation
Tokyo 105-7325 (JP)**

(72) Inventor: **MORIHARA, Masumi
Tagawa-shi, Fukuoka 825-0005 (JP)**

(74) Representative: **Hoffmann Eitle
Patent- und Rechtsanwälte PartmbB
Arabellastraße 30
81925 München (DE)**

(54) **LAMINATE AND LAMINATE PRODUCTION METHOD**

(57)    A laminate including: a substrate; and a silver particle layer that is disposed on the substrate and contains silver particles, the silver particle layer having an L* value in L*a*b* color space of 75 or more, and the laminate having radio-wave transmissivity.

FIG. 1

## Description

[Technical Field]

The present invention relates to a laminate and a laminate production method.

[Background Art]

In recent years, automobiles have increasingly been equipped with, as a means for ensuring safety, for example, automatic collision avoidance systems.

An automatic collision avoidance system automatically applies brakes by using image data obtained from an onboard camera and information of relative distance with respect to an object. The information of relative distance is obtained by a millimeter-wave transceiver, which transmits and receives millimeter waves and is referred to as a millimeter-wave radar.

The millimeter-wave radar that constitutes the automatic collision avoidance system is preferably disposed at the center of the front portion of the automobile. An emblem is generally disposed at the center of the front portion of the automobile. Accordingly, it is desirable to dispose the millimeter-wave radar behind the emblem.

An emblem generally has a metal film formed on a substrate made of resin or the like in order to exhibit a metallic luster. For example, Japanese Patent Application Laid-Open No. 2019-177311 discloses a millimeter-wave-transmissive decorative article provided with a silver mirror film that exhibits millimeter-wave transmissivity and has an L* value in the L*a*b* color space of 65 or more.

[Summary of the Invention]

[Problem to be Solved by the Invention]

With the growing trend toward higher-end automobiles of recent years, further improvement in brilliance has been desired for automotive components such as emblems that have radio-wave transmissivity.

The present disclosure has been made in view of the above circumstances, and an object thereof is to provide a laminate having excellent brilliance and radio-wave transmissivity.

[Means for Solving the Problem]

Specific means for achieving the above object are as follows.

<1> A laminate including:

a substrate; and
a silver particle layer that is disposed on the substrate and contains silver particles,
the silver particle layer having an L* value in L*a*b* color space of 75 or more, and
the laminate having radio-wave transmissivity.

<2> The laminate, wherein the silver particle layer has a surface resistivity of $1 \times 10^5$ $\Omega/\square$ or more.
<3> The laminate according to <1> or <2>, wherein the laminate is capable of transmitting millimeter waves.
<4> The laminate according to any one of <1> to <3>, wherein the laminate is an automotive component.
<5> A method for producing the laminate according to any one of <1> to <4>, the method including a process of forming a silver particle layer on a substrate,
the process including bringing an ammoniacal silver nitrate aqueous solution into contact with a reducing agent aqueous solution.

[Effect of the Invention]

According to the present disclosure, a laminate having excellent brilliance and radio-wave transmissivity is provided.

[Brief Description of the Drawings]

FIG. 1 is a diagram illustrating components at a front portion of an automobile to which the laminate of the present disclosure can be applied.

FIG. 2 is a diagram illustrating components at a side-to-rear portion of an automobile to which the laminate of the present disclosure can be applied.

FIG. 3 is a diagram illustrating components at an interior portion of an automobile to which the laminate of the present disclosure can be applied.

[Embodiments for Implementing the Invention]

In the following, embodiments for carrying out the present disclosure are described in detail. However, the present disclosure is in no way limited to the following embodiments. In the following embodiments, constituent elements (including element steps and the like) of the embodiments are not essential, unless otherwise specified. Likewise, numerical values and ranges thereof are not intended to restrict the present disclosure.

In the present disclosure, any numerical range described using the expression "... to ..." represents a range in which numerical values described before and after the "to" are included in the range as a minimum value and a maximum value, respectively.

In a numerical range described in a stepwise manner, in the present disclosure, an upper limit value or a lower limit value described in one numerical range may be replaced with an upper limit value or a lower limit value in another numerical range described in a stepwise manner. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, particles corresponding to each component may include plural kinds of particles. In a case in which plural kinds of particles corresponding to each component are present in a composition, the particle size of each component refers to the value of the particle size of a mixture of the plural kinds of particles present in the composition, unless otherwise specified.

In the present disclosure, the terms "layer" and "film" include, when a region where a layer or a film is present is observed, a case in which a layer or a film is formed at a portion of the region, in addition to a case in which a layer or a film is formed at the entirety of the region.

<Laminate>

The laminate of the present disclosure includes:

a substrate; and
a silver particle layer that is disposed on the substrate and contains silver particles,
the silver particle layer having an L* value in L*a*b* color space of 75 or more, and
the laminate having radio-wave transmissivity.

The laminate of the present disclosure exhibits excellent brilliance while having radio-wave transmissivity. Although the reason therefor is not clear, it is presumed as follows.

In the laminate of the present disclosure, the silver particle layer is in a state in which silver particles having relatively uniform sizes are arranged. Therefore, it is considered that radio waves can easily pass through gaps between the silver particles, and that high brilliance can be obtained.

The laminate of the present disclosure includes a silver particle layer having an L* value in the L*a*b* color space of 75 or more.

The L*a*b* color space is a color space standardized by the International Commission on Illumination (CIE) in 1976 and adopted in JIS Z 8781-4:2013.

In the L*a*b* color space, L* is an index of lightness and is a numerical value ranging from 0 (black) to 100 (white). That is, a higher L* value of the silver particle layer indicates higher lightness of the silver particle layer and superior brilliance.

From the viewpoint of achieving excellent brilliance, the L* value in the L*a*b* color space of the silver particle layer is preferably 80 or more, more preferably 82 or more, and still more preferably 83 or more.

In the present disclosure, the L* value in the L*a*b* color space of the silver particle layer is a value measured using an SCI-mode spectrophotometer (for example, CM-2600d manufactured by Konica Minolta, Inc.).

In the present disclosure, the surface resistivity of the silver particle layer is an index of radio-wave transmissivity of the silver particle layer, and a higher surface resistivity indicates higher radio-wave transmissivity.

From the viewpoint of ensuring sufficient radio-wave transmissivity of the silver particle layer, the surface resistivity of the silver particle layer is preferably $1 \times 10^5$ Ω/□ or more, more preferably $5 \times 10^5$ Ω/□ or more, and further preferably $1 \times 10^6$ Ω/□ or more.

The surface resistivity of the silver particle layer may be $1 \times 10^{10}$ Ω/□ or less, $1 \times 10^9$ Ω/□ or less, $1 \times 10^8$ Ω/□ or less, or $1 \times 10^7$ Ω/□ or less.

In the present disclosure, the surface resistivity of the silver particle layer refers to a value measured in accordance with JIS K 6911:2006.

In the present disclosure, the type of radio waves transmitted by the silver particle layer is not particularly limited, and may be selected according to the intended use of the laminate. Specific examples of radio waves transmitted by the silver particle layer include millimeter waves and microwaves, among which millimeter waves are preferred.

In the present disclosure, the term millimeter waves refer to radio waves having a frequency of from 20 GHz to 300 GHz.

The silver particle layer may exhibit transmittance with respect to at least part of the wavelength region from infrared light to visible light.

Hereinafter, each member used in the present disclosure will be described.

- Substrate -

The material of the substrate is not particularly limited, and inorganic materials such as glass, organic materials such as resins, and the like may be used. Examples of the resins include thermosetting resins and thermoplastic resins.

Examples of the thermoplastic resins include polyethylene, polypropylene, polycarbonate, polystyrene, polyvinyl chloride, vinyl-based polymers, polyesters, polyamides, ABS resins (acrylonitrile-butadiene-styrene copolymer resins), polyesters, thermoplastic elastomers, and acrylic resins. These resins may be used alone or in combination of two or more kinds. An example of a combination of two or more resins includes a combination of polycarbonate and ABS resin.

Examples of the thermosetting resins include silicone resins, polyurethane resins, polyester resins, melamine resins, epoxy resins, phenolic resins, and urea resins. These resins may be used alone or in combination of two or more kinds.

When the laminate is used for automobile components such as emblems, the material of the substrate is preferably polypropylene, polycarbonate, ABS resin, polycarbonate/ABS, acrylic resin, or the like. Polypropylene has a relatively low specific gravity among resins, is easy to process, is high in tensile strength, impact strength and compressive strength, and has excellent weather resistance and heat resistance. ABS resin is a resin that is relatively easy to subject to surface treatment among plastic materials, and is easy to perform treatments such as coating after the formation of the substrate. ABS resin also exhibits excellent chemical resistance and rigidity, and superior impact resistance, heat resistance and cold resistance. Polycarbonate has particularly high impact resistance among plastic materials, exhibits excellent weather resistance and heat resistance, and is highly transparent. In addition, polycarbonate is easy to process and is relatively lightweight and durable among plastic materials.

The substrate may be provided with an undercoat layer for the purpose of improving the adhesion between the substrate and the silver particle layer, smoothing the surface of the substrate, or the like.

The material of the undercoat layer is not particularly limited and may be selected according to the purpose of the undercoat layer. For example, fluororesins, polyester resins, epoxy resins, melamine resins, silicone resins, acrylic silicone resins, acrylic urethane resins, and the like may be used. These resins may be in the form of a coating composition to which a solvent or the like has been added.

The thickness of the undercoat layer is not particularly limited; however, from the viewpoint of ensuring a smooth surface, the thickness is preferably about from 5 μm to 25 μm.

In order to enhance the adhesion between the undercoat layer and the substrate, a primer layer may be provided between the undercoat layer and the substrate.

The thickness of the substrate can be appropriately designed according to the intended use of the laminate. The shape of the substrate is also not particularly limited. The substrate may be, for example, a flat plate or a curved plate.

- Silver Particle Layer -

The silver particle layer contains silver particles. The silver particle layer may be formed by a silver mirror reaction. In addition, the silver particles contained in the silver particle layer may include silver particles precipitated by a silver mirror reaction (precipitated silver particles). Furthermore, the silver particle layer may have a sea-island structure in which silver particles are dispersed in an island-like manner.

The formation of the silver particle layer by a silver mirror reaction may be carried out by bringing an ammoniacal silver nitrate aqueous solution into contact with a reducing agent aqueous solution. In this way, a redox reaction occurs to generate silver particles, thereby forming the silver particle layer.

In one embodiment of the present disclosure, the ammoniacal silver nitrate aqueous solution is obtained by dissolving silver nitrate, ammonia, and at least one amine compound selected from the group consisting of amino alcohol compounds, amino acids, and amino acid salts, in water.

Specific examples of the amine compound include amino alcohol compounds such as monoethanolamine, diethanolamine, diisopropanolamine, triethanolamine, and triisopropanolamine, and amino acids or salts thereof such as glycine, alanine, and sodium glycinate.

The contents of silver nitrate, ammonia, and the amine compound contained in the ammoniacal silver nitrate aqueous solution are not particularly limited.

The concentration of silver nitrate contained in the ammoniacal silver nitrate aqueous solution is not particularly limited; however, from the viewpoint of controlling the reaction rate, it is preferably adjusted within a range of from 0.1% by mass to 10% by mass.

The pH of the ammoniacal silver nitrate aqueous solution is preferably adjusted within a range of from 10 to 13, more preferably from 11 to 12.

In one embodiment of the present disclosure, the reducing agent aqueous solution is obtained by dissolving a reducing agent containing a phenolic compound and a strong alkaline component in water.

Examples of the phenolic compound contained in the reducing agent include benzene diol compounds such as hydroquinone, catechol, and resorcinol, among which hydroquinone is preferred.

The reducing agent may consist solely of a phenolic compound, or may be a combination of a phenolic compound and a compound other than a phenolic compound. Examples of compounds other than phenolic compounds include hydrazine compounds such as hydrazine sulfate, hydrazine carbonate and hydrazine hydrate, sulfite compounds such as sodium sulfite, and thiosulfate compounds such as sodium thiosulfate.

When the reducing agent contains both a phenolic compound and a compound other than a phenolic compound, the proportion of the phenolic compound is preferably 50% by mass or more, more preferably 70% by mass or more, and still more preferably 90% by mass or more, based on the total mass of the reducing agent.

Specific examples of the strong alkaline component contained in the reducing agent aqueous solution include sodium hydroxide and potassium hydroxide.

The reducing agent aqueous solution may optionally contain the above-described amine compound, as necessary.

The reducing agent aqueous solution may optionally contain a compound having a formyl group. Specific examples of the compound having a formyl group include glucose and glyoxal.

In the reducing agent aqueous solution, the contents of the reducing agent, the strong alkaline component, the amine compound optionally contained, and the compound having a formyl group optionally contained are not particularly limited.

The concentration of the reducing agent contained in the reducing agent aqueous solution is not particularly limited; however, from the viewpoint of controlling the reaction rate, it is preferably adjusted to be in the range of from 0.1% by mass to 10% by mass.

From the viewpoint of increasing the surface resistivity of the silver particle layer, the concentration of the reducing agent contained in the reducing agent aqueous solution is preferably 4% by mass or more, more preferably 5% by mass or more, or 6% by mass or more.

The pH of the reducing agent aqueous solution is preferably adjusted to be in the range of from 10 to 13, and more preferably in the range of from 10.5 to 11.5.

The average primary particle diameter of the silver particles in the silver particle layer is preferably 1 nm or more, more preferably 5 nm or more, and even more preferably 10 nm or more.

When the average primary particle diameter of the silver particles in the silver particle layer is 1 nm or more, the silver particle layer tends to exhibit improved homogeneity, thereby achieving an improved appearance.

The average primary particle diameter of the silver particles in the silver particle layer is preferably 30 nm or less, more preferably 25 nm or less, and even more preferably 20 nm or less.

The silver particles in the silver particle layer may aggregate to form secondary particles. When the silver particles form secondary particles, the average secondary particle diameter is preferably 350 nm or less, more preferably 300 nm or less, and even more preferably 250 nm or less.

The average primary particle diameter and the average secondary particle diameter of the silver particles are determined by measuring the diameters of 50 silver particles in an image obtained by scanning electron microscopy (SEM) or transmission electron microscopy (TEM), and calculating the arithmetic mean of the diameters of 50 silver particles.

The silver particles contained in the silver particle layer may be provided with a radio-wave-transmitting layer on their surfaces.

The radio-wave-transmitting layer provided on the surfaces of the silver particles is not particularly limited as long as it is capable of transmitting radio waves. Examples of radio waves include millimeter waves and microwaves, and the radio-wave-transmitting layer is preferably a millimeter-wave-transmitting layer that transmits millimeter waves. The radio-wave-transmitting layer is preferably a layer that transmits at least a portion of wavelengths in the range from infrared light to visible light.

Examples of the radio-wave-transmitting layer include an organic layer.

The organic layer may be composed of a reducing agent used in the silver mirror reaction, a compound derived from the reducing agent, or a combination thereof. For example, when hydroquinone is used as the reducing agent, the organic layer may be composed of hydroquinone, benzoquinone obtained by oxidation of hydroquinone, or a combination of hydroquinone and benzoquinone.

The average thickness of the radio-wave-transmitting layer is preferably from 20 nm to 400 nm, more preferably from 50 nm to 400 nm, further preferably from 70 nm to 350 nm, and particularly preferably from 100 nm to 250 nm.

When the average thickness of the radio-wave-transmitting layer is 400 nm or less, excellent radio-wave transmissivity is achieved, and when it is 20 nm or more, the silver particle layer has favorable homogeneity and the appearance thereof is improved.

The average thickness of the radio-wave-transmitting layer is determined by measuring the thicknesses at 50 locations of the radio-wave-transmitting layer, in an image obtained by a scanning transmission electron microscope (STEM) or an image obtained by a transmission electron microscopy-energy-dispersive X-ray spectroscopy (TEM-EDX), and calculating the arithmetic mean of the thicknesses at 50 locations.

When the silver particles aggregate to form secondary particles, it is preferable that a radio-wave-transmitting layer be provided on the surface of the primary silver particles. When the radio-wave-transmitting layer is provided on the surface of the primary silver particles, gaps are formed between the primary particles due to the presence of the radio-wave-transmitting layer even when the silver particles form secondary particles. As a result, radio waves can pass through these gaps, thereby achieving excellent radio-wave transmissivity.

The radio-wave-transmitting layer may be provided entirely or partially on the surface of the silver particles. The radio-wave-transmitting layer may be a collection of particulate matter.

The thickness of the silver particle layer formed on the substrate is not particularly limited. From the viewpoint of obtaining sufficient metallic luster, the thickness of the silver particle layer is preferably 50 nm or more, and from the viewpoint of obtaining sufficient radio-wave transmissivity, the thickness of the silver particle layer is preferably 300 nm or less.

When a cross section in the thickness direction of the silver particle layer is observed, the proportion of silver particles occupying the silver particle layer is preferably 95% or less. When the proportion of silver particles occupying the silver particle layer is 95% or less, radio-wave transmissivity tends to be further improved. From the viewpoint of obtaining sufficient metallic luster, the proportion of silver particles occupying the silver particle layer is preferably 80% or more.

The proportion of silver particles occupying the silver particle layer refers to a value measured as described below.

A transmission electron microscope (TEM) image of a cross section in the thickness direction of the silver particle layer in the laminate is taken at a magnification of 300,000×. From the obtained TEM image, a center line passing through the center in the thickness direction of the silver particle layer is determined. Next, the total length of portions where the center line overlaps with silver particles is measured. The value obtained by dividing the length of the portions where the center line overlaps with silver particles by the total length of the center line, and expressing the result as a percentage, is defined as the proportion of silver particles occupying the silver particle layer.

- Topcoat Layer -

The laminate may optionally include a layer other than the substrate and the silver particle layer. For example, a topcoat layer may be provided on the silver particle layer for the purpose of protecting the silver particle layer.

The topcoat layer preferably has transparency sufficient not to obscure the metallic luster of the silver particle layer, and transmittance sufficient not to block millimeter waves. The topcoat layer may be colorless and clear (colorless transparent) or colored and clear (colored transparent).

The material of the topcoat layer is not particularly limited, and may be selected, for example, from the resins described above as materials for the undercoat layer of the substrate.

The thickness of the topcoat layer is not particularly limited, and is preferably from about 20 $\mu$m to 40 $\mu$m. When the thickness of the topcoat layer is 20 $\mu$m or more, the silver particle layer tends to be sufficiently protected, and when the thickness is 40 $\mu$m or less, defects such as cracking, peeling, and poor adhesion due to aging are less likely to occur.

<Physical Properties of the Laminate>

The laminate preferably has a transmission attenuation at 77.0 GHz, which is in the millimeter-wave region, of 3.0 dB or less, more preferably 2.0 dB or less, and still more preferably 1.0 dB or less.

The transmission attenuation of the laminate is measured in accordance with JIS R 1679:2007 (Method for Measuring Millimeter-Wave Absorption Characteristics of Electromagnetic Wave Absorbers). Specifically, the transmission attenuation is calculated from the transmitted wave (transmission coefficient). The transmitted wave (transmission coefficient) is obtained by a free-space method in which a sample is placed between a transmitting antenna and a receiving antenna, and the sample is exposed to electromagnetic waves in a perpendicular direction. The transmission attenuation can be calculated using the absolute value of the transmission coefficient according to the following equation:

$$\text{Transmission attenuation} = 20 \log_{10} |(\text{transmission coefficient})|$$

When the laminate exhibits transmittance with respect to infrared radiation, the spectral transmittance at a wavelength of 800 nm, which is in the infrared region, is preferably 5% or more, and the spectral transmittance in the wavelength range from 900 nm to 1600 nm is preferably 10% or more.

When the laminate exhibits transmittance with respect to visible light, the spectral transmittance at a wavelength of 400 nm, which is in the visible light region, is preferably 1% or more; the spectral transmittance in the wavelength range from 500 nm to 600 nm is preferably 0.05% or more; and the spectral transmittance at a wavelength of 700 nm is preferably 1% or more.

It has been confirmed that, even when the spectral transmittance at a wavelength of 580 nm is approximately 0.1% as measured by the measurement method described below, sufficient color discrimination is possible by visual observation.

The spectral reflectance at a wavelength of 400 nm, which is in the visible light region, is preferably 40% or more; the spectral reflectance at a wavelength of 500 nm is preferably 60% or more; the spectral reflectance at a wavelength of 600 nm is preferably 50% or more; and the spectral reflectance in the wavelength range from 700 nm to 800 nm is preferably 35% or more.

The spectral transmittance and spectral reflectance of the laminate in the infrared-to-visible wavelength region are measured using a ultraviolet-visible-near-infrared (UV-VIS-NIR) spectrophotometer at 25°C in an atmospheric environment.

<Method for Producing Laminate>

The method for producing the laminate is not particularly limited. In the following, a method in which the silver particle layer is formed by a silver mirror reaction will be described.

In the formation of the silver particle layer by the silver mirror reaction, the method of bringing an ammoniacal silver nitrate aqueous solution into contact with a reducing agent aqueous solution is not particularly limited. Examples of the method include a method in which these aqueous solutions are applied to the surface of the substrate in a mixed state, or a method in which they are applied to the surface of the substrate without being mixed in advance.

The method of applying the ammoniacal silver nitrate aqueous solution and the reducing agent aqueous solution to the surface for silver mirror reaction treatment is not particularly limited. Among the methods, spray coating, which enables formation of a uniform silver particle layer regardless of the shape of the substrate, is preferable. The spray coating can be carried out using known means such as an airbrush or a spray gun.

In cases where the silver particles contained in the silver particle layer have a radio-wave-transmitting layer, and the radio-wave-transmitting layer is composed of a reducing agent, a compound derived from the reducing agent, or a combination thereof, it is preferable to perform the above-described spray coating by the following method, from the viewpoint of ensuring that the radio-wave-transmitting layer is more reliably present on the surfaces of the silver particles.

Separate airbrushes are used for the ammoniacal silver nitrate aqueous solution and the reducing agent aqueous solution. The positions and discharge directions of the airbrushes are fixed, and spray coating is performed over the entire surface of the substrate by moving the substrate. It is preferable that the position for spray coating with the ammoniacal silver nitrate aqueous solution discharged from one airbrush overlaps with the position for spray coating with the reducing agent aqueous solution discharged from the other airbrush.

By fixing the positions and discharge directions of the airbrushes, the discharge conditions of each solution can be kept constant. As a result, it is possible to form the radio-wave-transmitting layer on the surfaces of the silver particles in a uniform and reliable manner. The manner of moving the substrate is not particularly limited, and the substrate may be rotated or slid, for example. Further, according to this method, the spray coating from the airbrushes and the movement of the substrate can be automated.

The discharge amount for the respective solutions from the airbrush may be, for example, from 1 g per 10 seconds to 10 g per 10 seconds, preferably from 4 g per 10 seconds to 8 g per 10 seconds.

If necessary, the surface of the substrate before forming the silver particle layer may be subjected to surface activation treatment.

In one embodiment of the present disclosure, the surface activation treatment involves applying a surface activation treatment liquid containing an inorganic tin compound to the surface of the substrate, thereby allowing tin to be present on the surface of the substrate. The presence of tin between the silver particle layer and the substrate tends to improve the adhesion between the substrate and the silver particles.

Examples of the inorganic tin compound contained in the surface activation treatment liquid include inorganic tin compounds such as tin(II) chloride, tin(II) oxide, and tin(II) sulfate.

The surface activation treatment liquid may further contain, in addition to the inorganic tin compound, hydrogen chloride, hydrogen peroxide, polyhydric alcohols, or the like, as necessary.

The contents of these components contained in the surface activation treatment liquid are not particularly limited.

The pH of the surface activation treatment liquid is preferably adjusted to be from 0.5 to 3.0, and more preferably from 0.5 to 1.5.

Methods for applying the surface activation treatment liquid to the surface of the substrate include, for example, a method of immersing the substrate in the surface activation treatment liquid and a method of coating the surface of the substrate with the surface activation treatment liquid. Among these methods, spray coating is preferred, since it allows uniform application regardless of the shape of the substrate.

After the surface activation treatment, it is preferable to remove excess surface activation treatment liquid adhering to the surface of the substrate. For example, the surface of the substrate is preferably washed with deionized water or purified distilled water.

If necessary, a pretreatment may be performed on the surface of the substrate before forming the silver particle layer.

In one embodiment of the present disclosure, as the pretreatment, a pretreatment liquid such as an aqueous silver nitrate solution is applied to the surface of the substrate after the above-described surface activation treatment. As a result, silver is present on the surface of the substrate. The presence of silver between the silver particle layer and the substrate tends to facilitate the deposition of silver particles having uniform sizes.

The pH of the pretreatment liquid is preferably adjusted to be from 4.0 to 8.0, and more preferably from 6.0 to 7.0.

Examples of methods for applying the pretreatment liquid to the surface of the substrate include a method in which the substrate is immersed in the pretreatment liquid and a method in which the pretreatment liquid is applied to the surface of the substrate. Among these methods, spray application is preferable, since it enables uniform application regardless of the shape of the substrate.

If necessary, an inactivation treatment may be performed after forming the silver particle layer on the surface of the substrate.

In one embodiment of the present disclosure, as the inactivation treatment, an inactivation treatment liquid, which is an aqueous solution containing a strong alkali component such as potassium hydroxide and a sulfite such as sodium sulfite, is brought into contact with the silver particle layer. As a result, the reactivity between silver in the silver particle layer and residual ions such as chloride ions and sulfide ions can be reduced.

The contents of the components contained in the inactivation treatment liquid are not particularly limited.

The pH of the inactivation treatment liquid is preferably adjusted to be from 4.0 to 8.0, and more preferably from 7.0 to 8.0.

Examples of methods for bringing the inactivation treatment liquid into contact with the silver particle layer include a method in which the substrate on which the silver particle layer has been formed is immersed in the inactivation treatment liquid, and a method in which the inactivation treatment liquid is applied to the silver particle layer. Among these methods, spray application is preferable, since it enables uniform application regardless of the shape of the substrate.

Before and after the inactivation treatment, it is preferable to wash the silver particle layer with deionized water or purified distilled water.

<Use of Laminate >

The laminate of the present disclosure has a metallic luster and excellent millimeter-wave transmissivity. Accordingly, the laminate is particularly suitable for use as an automotive component such as an emblem. Specifically, when the laminate is disposed at the front of a vehicle as an automotive emblem, it can function as an emblem without inhibiting the transmission and reception of millimeter waves by a millimeter-wave radar disposed behind the emblem.

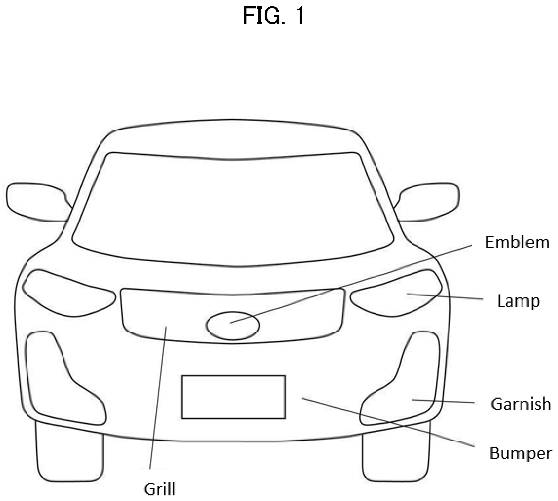

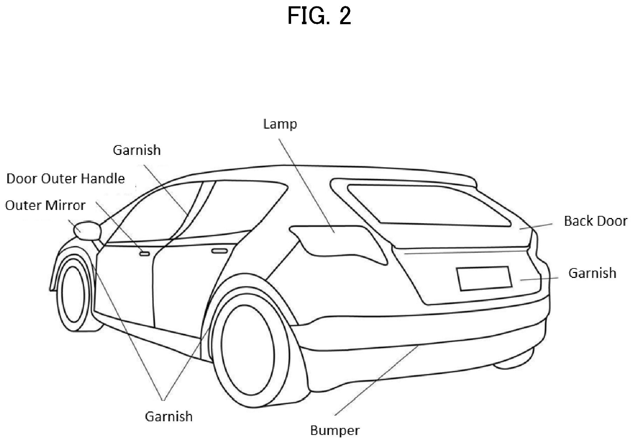

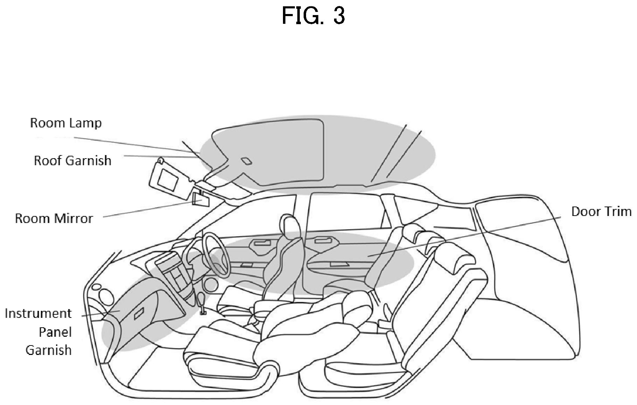

The laminate of the present disclosure is also applicable to interior and exterior components for automobiles, other than emblems. Examples of such interior and exterior components other than emblems include, for example, front components as illustrated in FIG. 1, side-to-rear components as illustrated in FIG. 2, and interior components as illustrated in FIG. 3.

Specific examples of the components include sensing modules for vehicle peripheral components such as bumpers, grilles, back doors, and garnish parts; interior parts for human detection sensors and vital sensing used inside and outside vehicles; and sensor modules for door mirrors, door handles, room mirrors, lamps, and the like.

[Examples]

Hereinafter, the present disclosure will be described based on Examples; however, the present disclosure is not limited to the following Examples.

<Preparation of Laminate >

(1) Preparation of Substrate

The surface of a polycarbonate substrate having a thickness of 2 mm was wiped with a cloth impregnated with isopropyl alcohol to remove oil films, contaminants, and dust. Thereafter, the substrate was dried.

(2) Surface Activation Process

After spray-washing the substrate on which an undercoat layer had been formed with pure water, a surface activation treatment liquid (manufactured by Mitsubishi Paper Mills Ltd., MSPS-Sa1A) was applied to the substrate by spray coating. Thereafter, the substrate was spray-washed with pure water. An aqueous solution having a pH of 1.0 and containing tin(II) chloride, hydrochloric acid, hydrogen peroxide, and a polyhydric alcohol was used as the surface activation treatment liquid.

(3) Pretreatment Process

A pretreatment liquid (manufactured by Mitsubishi Paper Mills Ltd., MSPS-Sa2A) was applied by spray coating to the surface of the substrate after the surface activation treatment. Thereafter, the substrate was spray-washed with pure water. An aqueous solution of silver nitrate having a pH of 6.8 was used as the pretreatment liquid.

(4) Silver Particle Layer Formation Process

An ammoniacal silver nitrate aqueous solution and a reducing agent aqueous solution were prepared.
An aqueous solution having a pH of 11.5 and containing silver nitrate, ammonia, and triethanolamine (silver nitrate concentration: 0.5% by mass) was prepared as the ammoniacal silver nitrate aqueous solution.
An aqueous solution having a pH of 10.8 and containing hydroquinone, triethanolamine, sodium hydroxide, and an amino alcohol was prepared as the reducing agent aqueous solution.
The amount of hydroquinone in the reducing agent aqueous solution was adjusted such that its concentration (% by mass) corresponded to the values shown in Table 1.
Separate airbrushes were disposed such that the ammoniacal silver nitrate aqueous solution and the reducing agent aqueous solution were simultaneously discharged therefrom to perform spray coating. The position and discharge direction of each airbrush were fixed. The substrate after pretreatment was mounted on a rotational support member, and the solutions were discharged from the airbrushes toward the substrate while rotating the substrate in a horizontal direction. The rotation speed of the substrate was set to 120 revolutions per minute. The discharge rate of each airbrush was set to a range of from 1.0 g/10 seconds to 1.5 g/10 seconds. During this process, silver particles were deposited on the surface of the substrate by a silver mirror reaction, thereby forming a silver particle layer having a silver luster (thickness: 0.2 μm). Thereafter, the substrate was spray-washed with pure water.

(5) Inactivation Treatment Process

After the silver particle layer formation process, an inactivation treatment liquid (manufactured by Mitsubishi Paper Mills Limited, MSPS-R1A) was applied to the surface of the substrate by spray coating. Thereafter, the substrate was spray-washed with pure water, thereby obtaining the laminate of Example 1.
An aqueous solution having a pH of 7.5 and containing potassium hydroxide and a sulfite was used as the inactivation treatment liquid used in the inactivation treatment.

<Evaluation>

(1) Measurement of Color Difference

The L* value in the L*a*b* color space of the silver particle layer of the laminate was measured using an SCI-type spectrophotometer (manufactured by Konica Minolta, Inc., CM-2600d). The results are shown in Table 1.

(2) Measurement of Surface Resistivity

The surface resistivity of the silver particle layer of the laminate was measured using a surface resistivity meter (manufactured by Taiyo Electric Ind. Co., Ltd., WA-400). The measurement was performed by pressing the electrodes for surface resistivity measurement against the silver particle layer. The results are shown in Table 1.

(3) Measurement of Millimeter-Wave Transmission Attenuation

A topcoat layer composition was prepared by blending MSPS Topcoat Clear M, MSPS Topcoat Thinner P-7, and MSPS Topcoat Curing Agent W (all manufactured by Ohashi Chemical Industry Co., Ltd.) at a mass ratio of 20 : 20 : 5 in the foregoing order.
The composition was applied onto the silver particle layer of the laminate by spray coating, thereby forming a topcoat layer having a thickness of 25 μm.
The laminate provided with the topcoat layer was subjected to the measurement of attenuation amount (transmission attenuation) when millimeter waves (77.0125 GHz) were transmitted by the method described below. The results are shown in Table 1.
The transmission attenuation of the laminate was measured in accordance with JIS R 1679:2007 (Method for Measuring Millimeter-Wave Absorption Characteristics of Electromagnetic Wave Absorbers). Specifically, the transmission attenuation is calculated from the transmitted wave (transmission coefficient). The transmitted wave (transmission coefficient) was obtained by a free-space method in which a sample is placed between a transmitting antenna and a receiving antenna, and the sample is exposed to electromagnetic waves in a perpendicular direction.
The transmission attenuation can be calculated using the transmission coefficient (absolute value) according to the following equation:

$$\text{Transmission attenuation} = 20 \log_{10} |(\text{transmission coefficient})|$$

[Table 1]

| Sample No. | Hydroquinone [% by mass] | L* | Surface Resistivity [Ω/□] | Transmission Attenuation [dB] |
|---|---|---|---|---|
| 1 | 6.0 | 83.79 | $1 \times 10^6$ | 0.97 |
| 2 | 9.0 | 83.73 | $1 \times 10^6$ | 0.96 |
| 3 | 12.0 | 85.13 | $1 \times 10^6$ | 0.93 |

As shown in Table 1, the laminates produced in the Examples exhibited a high surface resistivity and excellent radio-wave transmissivity, and showed a high L* value in the L*a*b* color space of the silver particle layer, indicating excellent brilliance.

**Claims**

1. A laminate comprising:

    a substrate; and
    a silver particle layer that is disposed on the substrate and contains silver particles,
    the silver particle layer having an L* value in L*a*b* color space of 75 or more, and
    the laminate having radio-wave transmissivity.

2. The laminate, wherein the silver particle layer has a surface resistivity of $1 \times 10^5$ Ω/□ or more.

3. The laminate according to claim 1, wherein the laminate is capable of transmitting millimeter waves.

4. The laminate according to claim 1, wherein the laminate is an automotive component.

5. A method for producing the laminate according to any one of claim 1 to claim 4, the method comprising a process of forming a silver particle layer on a substrate,

the process including bringing an ammoniacal silver nitrate aqueous solution into contact with a reducing agent aqueous solution.

FIG. 1

Emblem

Lamp

Garnish

Bumper

Grill

# FIG. 2

## FIG. 3

**EP 4 759 537 A1**

## INTERNATIONAL SEARCH REPORT

| | International application No. |
|---|---|
| | **PCT/JP2023/029176** |

| A. | CLASSIFICATION OF SUBJECT MATTER |
|---|---|
| | *B32B 15/08*(2006.01)i; *B32B 15/04*(2006.01)i <br> FI: B32B15/08 P; B32B15/04 B |

According to International Patent Classification (IPC) or to both national classification and IPC

| B. | FIELDS SEARCHED |
|---|---|

Minimum documentation searched (classification system followed by classification symbols)

B32B1/00-43/00; G01S7/00-7/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X <br><br> Y | WO 2019/221213 A1 (IKUYO CO., LTD.) 21 November 2019 (2019-11-21) <br> claims 1, 6, paragraphs [0001], [0008], example 8 | 1-4 <br><br> 5 |
| X <br><br><br> Y | WO 2022/014050 A1 (SHOWA DENKO MATERIALS CO., LTD.) 20 January 2022 (2022-01-20) <br> claims 1, 3-4, paragraphs [0006], [0010]-[0052] | 1-5 <br><br><br> 5 |
| A | WO 2019/187328 A1 (TOYODA GOSEI KK) 03 October 2019 (2019-10-03) <br> whole document | 1-5 |
| A | WO 2023/037871 A1 (RESONAC CORP.) 16 March 2023 (2023-03-16) <br> whole document | 1-5 |
| A | JP 2021-17652 A (TOPPAN PRINTING CO., LTD.) 15 February 2021 (2021-02-15) <br> whole document | 1-5 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 October 2023** | **07 November 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
| :--- |
| **PCT/JP2023/029176** |

| C. | DOCUMENTS CONSIDERED TO BE RELEVANT | |
| :---: | :--- | :---: |
| Category* | Citation of document, with indication, where appropriate, of the relevant passages | Relevant to claim No. |
| A | JP 2015-80934 A (TOYOTA JIDOSHA KABUSHIKI KAISHA) 27 April 2015 (2015-04-27) whole document | 1-5 |

Form PCT/ISA/210 (second sheet) (January 2015)

## INTERNATIONAL SEARCH REPORT
### Information on patent family members

International application No.

**PCT/JP2023/029176**

| Patent document cited in search report | | | Publication date (day/month/year) | Patent family member(s) | | | Publication date (day/month/year) |
|---|---|---|---|---|---|---|---|
| WO | 2019/221213 | A1 | 21 November 2019 | US | 2021/0194119 | A1 | |
| | | | | claims 1, 6, paragraphs [0001], [0008], example 8 | | | |
| | | | | CN | 112424630 | A | |
| WO | 2022/014050 | A1 | 20 January 2022 | EP | 4180221 | A1 | |
| | | | | claims 1, 3-4, paragraphs [0009], [0019]-[0086] | | | |
| | | | | CN | 116133759 | A | |
| WO | 2019/187328 | A1 | 03 October 2019 | JP | 2019-177311 | A | |
| WO | 2023/037871 | A1 | 16 March 2023 | JP | 2023-39302 | A | |
| JP | 2021-17652 | A | 15 February 2021 | (Family: none) | | | |
| JP | 2015-80934 | A | 27 April 2015 | US | 2016/0256891 | A1 | |
| | | | | whole document | | | |
| | | | | WO | 2015/059539 | A1 | |
| | | | | CN | 105658714 | A | |

Form PCT/ISA/210 (patent family annex) (January 2015)

**REFERENCES CITED IN THE DESCRIPTION**

**Patent documents cited in the description**

- JP 2019177311 A